# EUROPEAN PATENT SPECIFICATION

(11) **EP 0 218 924 B1**
(45) Date of publication and mention of the grant of the patent: **04.08.1993**
(21) Application number: 86112584.7
(22) Date of filing: 11.09.1986
(51) Int. Cl.: G21C 3/62

(54) **A method of manufacturing sintered nuclear fuel bodies**
Verfahren zur Herstellung von gesinterten Kernbrennstoffkörpern
Procédé de fabrication de pastilles combustibles nucléaires par frittage

(30) Priority: 18.09.1985 SE 8504325
(43) Date of publication of application: 22.04.1987
(73) Proprietor: AB ASEA-ATOM, S-721 83 Västeras (SE)
(72) Inventor: Hälldahl, Lars, S-724 76 Västeras (SE)
(74) Representative: Boecker, Joachim, Dr.-Ing.

(56) References cited:
- EP-A- 0 026 389
- FR-A- 2 536 571
- US-A- 3 917 768
- JOURNAL OF THE AMERICAN CERAMIC SOCIETY, vol. 48, no. 5, June 1965, pages 271-274; R.J. BEALS et al.: "Solid solutions in the system urania-rare-earth oxides: I, UO2-GdO1.5

## Description

The invention relates to a method of manufacturing sintered nuclear bodies according to the precharacterising part of claim 1. Such a method is known from the US-A-3 917 768.

When manufacturing pellets of uranium dioxide for use as fuel in nuclear reactors, powder of uranium dioxide is pressed into pellets, which are sintered and ground to accurate dimension. A large number of such pellets are stacked on top of each other in a cladding tube, usually of zircaloy, with a small gap between the envelope surface of the pellets and the inner wall of the cladding tube. The cladding tube is sealed by end plugs welded to the tube. The cladding tube is filled with helium under pressure. Such a finished cladding tube is usually termed "fuel element" or "fuel rod".

In a fuel rod bundle, which includes a plurality of fuel rods, sometimes 6x6, 7x7 or 9x9 fuel rods, there may be placed, instead of one or more fuel rods with uranium dioxide pellets, rods with pellets containing a burnable neutron absorber material in the form of gadolinium dissolved in the uranium dioxide structure. Possibly added U₃O₈ has been reduced to UO₂ during the sintering process. In this way, an improved reactivity control can be achieved during the earlier part of an operating period of the nuclear reactor without the absorber material having any major negative effect on the subsequent part of an operating period of the reactor when the absorber material has lost its neutron absorbing ability to a considerable extent. However, a certain residual absorption remains.

When manufacturing the known pellets containing an absorber material, Gd₂O₃ with a cubic crystal lattice is used, which is the commercially available modification of Gd₂O₃. During the sintering of the pellets, gadolinium atoms enter the UO₂ lattice and replace individual uranium atoms therein. A solid solution is then formed.

The. US-A-3 917 768 describes a method of manufacturing nuclear fuel pellets containing micro-spheres of Gd₂O₃. Prior to mixing the Gd₂O₃-pellets with uranium dioxide powder the micro-spheres are transformed by heat treatment to monoclinic modification whereafter the micro-spheres are coated with molybdenum or another metal. This coating is done in order to prevent any reaction between the Gd₂O₃-microspheres and the uranium dioxide after mixing these two components and subjecting the mixture to sintering temperatures.

The invention aims at improving the known method of manufacturing sintered nuclear fuel bodies such that the manufactured pellets exhibit a superior quality with respect to uniformity and predictability of properties especially with respect to their absorption ability and dimensional stability under operating conditions.

To achieve this aim the invention suggests a method according to the introductory part of claim 1, which is characterized by the features of the characterizing part of claim 1.

Further developments of the invention are characterized by the features of the additional claims.

The use of Gd₂O₃ having a monocline structure has the surprising effect of giving the sintered pellet a considerable increase in homogeneity with regard to solid solution of gadolinium in the UO₂ lattice. Thus a pellet is obtained in which a considerably greater part of the gadolinium atoms has entered and replaced uranium atoms in the UO₂ lattice resulting in a product, in which the proportion of gadolinium is more evenly distributed in the entire product. This results in the sintered pellets acquiring a more uniform quality enabling properties to be predetermined in an more reliable manner, especially as regards absorption of neutrons and stability under the operating conditions of the reactor so that the dimensions of the pellets and hence the gap between pellets and cladding tube can be maintained at predetermined optimum values.

A probable explanation of the favourable results obtained by the invention is the following. Under the conditions used during the sintering, cubic Gd₂O₃ changes from cubic to monocline phase. Since monoclinic Gd₂O₃ has a higher density than cubic Gd₂O₃, that is, a smaller volume for a given quantity of Gd₂O₃, the phase transformation means a volumetric reduction of the Gd₂O₃ crystallites, so that gaps or spaces develop, which may result in a deteriorated contact between the Gd₂O₃ crystallites and the UO₂ crystallites. When using a monoclinic Gd₂O₃ as starting material instead of cubic Gd₂O₃, no phase transformation of Gd₂O₃ takes place during the sintering and therefore no formation of gaps or spaces between the Gd₂O₃ crystallites and the UO₂ crystallites can occur. In this way, gadolinium atoms would enter the uranium dioxide lattice in a more efficient way to replace uranium atoms therein.

The powder of uranium dioxide may contain up to 20 per cent by weight U₃O₈ to attain a desired density of the sintered body and a desired stability thereof, so that the body does not undergo successive shrinkage or swelling when being subjected to stresses during operation in a reactor. The quantity of Gd₂O₃ in the powder amounts to 1-20 per cent by weight. By percentage by weight of a substance in uranium dioxide in this application is meant the weight of the substance in question in percentage of the total weight of the substance, the uranium dioxide, and any other substances which may be included in the powder.

Monoclinic Gd₂O₃ may be produced by heat treatment of commercial cubic Gd₂O₃ in air or another non-reactive atmosphere at a temperature of at least 1250^{o}C and preferably at most 1400^{o}C. The requisite time of treatment at 1350^{o}C is around 4 hours.

The powder of UO₂ suitably consists of a ground powder having an average particle size of 0.2-15 microns, preferably 1-5 microns. The average particle size of the powder of monoclinic Gd₂O₃ suitably amounts to 0.2-10 microns and preferably to 1-5 microns. The average particle size of the powder of U₃O₈ suitably amounts to 0.2-10 microns and v2 suitably amounts to 0.2-10 microns and preferably to 1-5 microns.

The pressing and the sintering of the powder can be carried out in a conventional manner. The pressing can suitably be carried out at a pressure of 200-450 MPa and preferably at a pressure of 250-350 MPa. The sintering may, among other things, be carried out in an atmosphere consisting of moistened hydrogen gas, usually containing 1-2 per cent by volume H₂O at a temperature of 1600-1800^{o}C, or in an atmosphere consisting of a mixture of hydrogen gas and carbon dioxide, in which the amount of carbon dioxide may constitute up to 20 per cent by volume of the total amount of hydrogen gas and carbon dioxide, at a temperature of 1600-1800^{o}C. Also other sintering atmospheres can be used with which an oxygen partial pressure, which at 1750^{o}C amounts to about 10⁻¹⁰ to 10⁻⁶ atm, can be achieved. Particularly favourable results with monoclinic Gd₂O₃ are obtained when using an oxygen partial pressure which at 1750^{o}C is higher than 10⁻⁷ atm, since in that case an increased rate of diffusion of the material, and hence a more efficient homogenization, is obtained.

The uranium dioxide in the powder to be sintered suitably has a composition of from UO_{2.10} to UO_{2.25} and preferably from UO_{2.12} to UO_{2.18}. The finished sintered material suitably has a composition of from (U,Gd)0_{2.00} to (U,Gd)0_{2.01} and preferably from (U,Gd)0_{2.000} to (U,Gd)0_{2.008}.

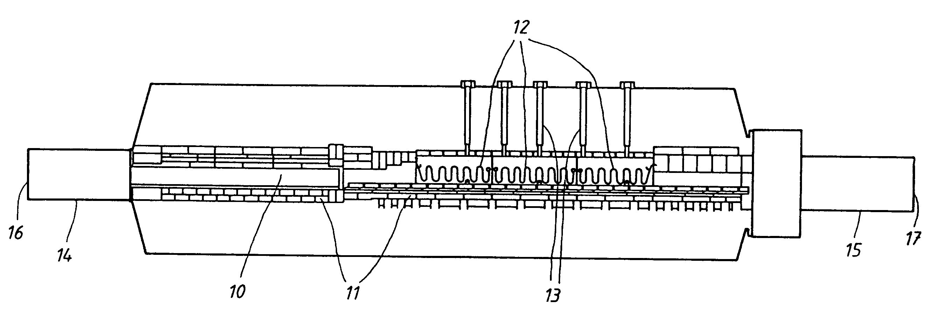

The invention will now be explained in greater detail by way of example with reference to the accompanying drawing, the single figure of which schematically shows a furnace for manufacturing sintered nuclear fuel bodies according to the invention.

The furnace is a tunnel furnace in which the actual furnace channel 10 is built up of sintered stones 11 of alumina. In the interior part of the furnace channel 10, electric heating elements 12 in the form of bundles of molybdenum wire are arranged. The furnace is provided with thermocouples for measuring the temperature at various locations. The bushings for the thermocouples are designated 13. The furnace channel 10 is extended, outside the furnace, by means of parts 14 and 15 of stainless steel. During sintering of nuclear fuel bodies in the furnace, compression-molded bodies of a uranium dioxide powder having the composition UO_{2.15} containing 10 per cent by weight Gd₂O₃ and 10 per cent by weight U₃O₈ are placed in "ships" of molybdenum which are moved through the furnace one after the other from one end 16 thereof to the other end 17 thereof. Gd₂O₃ consists of monoclinic Gd₂O₃, which has been manufactured by heat treatment of commercial cubic Gd₂O₃ in air at 1350^{o}C for four hours. The used powder has been manufactured by mixing a powder of the oxides stated, that is, the uranium oxides and monoclinic Gd₂O₃, with an average particle size of each one of 2-3 microns and prepressing of the mixture at a pressure of 100 MPa and room temperature, followed by granulation of the prepressed product and by screening of the granulated product, so that the size of the granules is less than 1.5 mm. After the granulation, 0.15% zinc stearate is intermixed, which acts as an internal lubricant. Thereafter, pressing takes place at a pressure of 300 MPa. The compression-molded bodies have then attained their final shape for the sintering. The movement of the ships through the furnace is performed by pushing them forwards as each new ship is brought in at the end 16. Opposite to the direction of movement of the ships, that is, from the end 17 of the furnace, the gas used during sintering is supplied, in this embodiment in the form of hydrogen gas containing H₂O, corresponding to a relative humidity of 80% at room temperature. The sintering atmosphere has an oxygen partial pressure of around 10⁻⁹ atm at 1750^{o}C. Since the furnace channel 10 is not provided with any partition walls, the gas may flow freely through the whole channel 10. The temperature of the nuclear fuel bodies increases from room temperature to about 1750^{o}C during the movement from the end 16 of the furnace and to a certain distance into the zone provided with heating elements 12. This temperature is maintained during at least the main part of the remaining movement through this zone. In connection with heating from room temperature, while using the sintering gas, mentioned above, supplied at the end 17, a reduction of the nuclear fuel material takes place so that the sintered bodies are given the composition ((U,Gd)O_{2.002}. The time for passage of a ship through the whole furnace amounts to 20-30 hours and the dwell time in the hottest area of the zone provided with heating elements 12 is 4-6 hours. The pressed pellets have a density of 5.50 g/cm³. After the sintering they have a density of 10.01 g/cm³. The pellets exhibit good stability.

In an alternative embodiment, a sintering atmosphere is used consisting of a mixture of 60 per cent by volume hydrogen gas and 40 per cent by volume carbon dioxide having an oxygen partial pressure of around 10⁻⁶ atm at 1750^{o}C, whereas the other conditions remain unchanged.

## Claims

1. A method of manufacturing sintered nuclear fuel bodies by pressing of a powder of UO₂ containing 1-20 per cent by weight of Gd₂O₃, which consists at least partly of monoclinic Gd₂O₃, and possibly contains up to 20 per cent U₃O₈, into a pressed body and sintering of the pressed body, **characterized** in that said at least partly monoclinic Gd₂O₃ is intermixed in direct contact with the UO₂-powder before the powder is subjected to sintering.

2. A method according to claim 1, **characterized** in that Gd₂O₃ contained in said powder is produced by heat treatment of cubic Gd₂O₃ at a temperature of at least 1250^{o}C.

3. A method according to claim 1 or 2, **characterized** in that the sintering of the pressed body is carried out in an atmosphere with an oxygen partial pressure in range of 10⁻¹⁰ to 10⁻⁶ atm at 1750^{o}C.

4. A method according to claim 3, **characterized** in that the sintering of the pressed body is carried out in an atmosphere with an oxygen partial pressure of more than 10⁻⁷ atm at 1750^{o}C.

5. A method according to any of the preceding claims, **characterized** in that the sintering is carried out at a temperature of 1600-1800^{o}C.

## Patentansprüche

1. Verfahren zur Herstellung gesinterter Kernbrennstoffkörper durch Pressen eines Pulvers aus UO₂, welches 1-20 Gewichtsprozent Gd₂O₃ enthält, welches mindestens zum Teil aus monoklinem Gd₂O₃ besteht und eventuell bis zu 20 Prozent U₃O₈ enthält, zu einem gepreßten Körper und durch Sintern des gepreßten Körpers, **dadurch gekennzeichnet,** daß das zumindest teilweise monokline Gd₂O₃ in direktem Kontakt mit dem UO₂-Pulver gemischt wird, bevor das Pulver gesintert wird.

2. Verfahren nach Anspruch 1, **dadurch gekennzeichnet,** daß das in dem Pulver enthaltenes Gd₂O₃ durch Wärmebehandlung von kubischem Gd₂O₃ bei einer Temperatur von mindestens 1250^{o}C erzeugt wird.

3. Verfahren nach Anspruch 1 oder 2, **dadurch gekennzeichnet,** daß das Sintern des gepreßten Körpers in einer Atmosphäre mit einem Sauerstoffpartialdruck im Bereich von 10⁻¹⁰ bis 10⁻⁶ atm bei 1750^{o}C durchgeführt wird.

4. Verfahren nach Anspruch 3, **dadurch gekennzeichnet,** daß das Sintern des gepreßten Körpers in einer Atmosphäre mit einem Sauerstoffpartialdruck von mehr als 10⁻⁷ atm bei 1750^{o}C durchgeführt wird.

5. Verfahren nach einem der vorhergehenden Ansprüche, **dadurch gekennzeichnet,** daß das Sintern bei einer Temperatur von 1600 bis 1800^{o}C durchgeführt wird.

## Revendications

1. Procédé de fabrication de pastilles frittées de combustible nucléaire, par pressage d'une poudre de UO₂ contenant de 1 à 20 pour cent en poids de Gd₂O₃, qui consiste au moins en partie en Gd₂O₃ monoclinique et qui contient, le cas échéant, jusqu'à 20 pour cent de U₃O₈ en un comprimé et par frittage du comprimé, caractérisé en ce qu'il consiste à mettre ledit Gd₂O₃ au moins partiellement monoclinique en contact direct avec la poudre de UO₂ avant de soumettre la poudre au frittage.

2. Procédé suivant la revendication 1, caractérisé en ce qu'il consiste à préparer le Gd₂O₃ contenu dans la poudre par traitement thermique de Gd₂O₃ cubique à une température d'au moins 1250^{o}C.

3. Procédé suivant la revendication 1 ou 2, caractérisé en ce qu'il consiste à effectuer le frittage du comprimé dans une atmosphère ayant une pression partielle d'oxygène comprise entre 10⁻¹⁰ et 10⁻⁶ atm à 1750^{o}C.

4. Procédé suivant la revendicaton 3, caractérisé en ce qu'il corsiste à effectuer le frittage du comprimé dans une atmosphère ayant une pression partielle d'oxygène supérieure à 10⁻⁷ atm à 1450^{o}C.

5. Procédé suivant l'une quelconque des revendications précédentes, caractérisé en ce qu'il consiste à effectuer le frittage à une température de 1600 à 1800^{o}C.
